(19) Europäisches Patentamt
European Patent Office
Office européen des brevets

(11) **EP 3 463 944 B1**

(12) **FASCICULE DE BREVET EUROPEEN**

(45) Date de publication et mention
de la délivrance du brevet:
**04.11.2020  Bulletin 2020/45**

(51) Int Cl.:
***B60H 1/00*** *(2006.01)*    ***B60H 3/06*** *(2006.01)*

(21) Numéro de dépôt: **17731204.8**

(86) Numéro de dépôt international:
**PCT/FR2017/051188**

(22) Date de dépôt: **17.05.2017**

(87) Numéro de publication internationale:
**WO 2017/203130 (30.11.2017 Gazette 2017/48)**

(54) **PROCÉDÉ DE CONTRÔLE D'UN SYSTÈME DE QUALITÉ D'AIR POUR VÉHICULE AUTOMOBILE**

VERFAHREN ZUM TESTEN EINES LUFTQUALITÄTSSYSTEMS FÜR EIN KRAFTFAHRZEUG

METHOD OF TESTING AN AIR QUALITY SYSTEM FOR A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **26.05.2016  FR 1654750**

(43) Date de publication de la demande:
**10.04.2019  Bulletin 2019/15**

(73) Titulaire: **Valeo Systemes Thermiques
78320 Le Mesnil Saint Denis (FR)**

(72) Inventeurs:
• **LADRECH, Frédéric
78322 LE MESNIL SAINT-DENIS CEDEX (FR)**
• **MARTINELL, Amanda
78322 LE MESNIL SAINT-DENIS CEDEX (FR)**

(74) Mandataire: **Tran, Chi-Hai et al
Valeo Systèmes Thermiques
BG THS - Service Propriété Industrielle THS
ZA L' Agiot, 8 rue Louis Lormand
CS 80517 La Verrière
78322 Le Mesnil Saint Denis Cedex (FR)**

(56) Documents cités:
**WO-A1-2006/016346    DE-A1-102008 014 401
FR-A1- 2 872 195**

**Description**

L'invention a pour objet un procédé de contrôle d'un système de qualité d'air pour véhicule automobile.

Un tel procédé est décrit dans le document FR2872195

Un système de qualité d'air d'un véhicule automobile permet une dépollution de l'air destiné à alimenter l'habitacle du véhicule automobile.

Ce système est soit intégré à un dispositif de chauffage, ventilation et/ou climatisation du véhicule automobile, soit un module spécialement dédié.

Dans un cas comme dans l'autre, le système comprend généralement un purificateur d'air, tel qu'un filtre et/ou un ioniseur, permettant d'assainir le flux d'air qui le parcourt avant de pénétrer dans l'habitacle du véhicule.

Le système de qualité d'air s'avère donc primordial pour la santé des utilisateurs du véhicule automobile.

Néanmoins, du fait que le système est passif et sollicité tout au long de la vie du véhicule automobile, il n'est pas rare que le purificateur d'air s'encrasse, ce qui a pour conséquence que l'air circulant dans l'habitacle n'est pas efficacement traité, induisant de ce fait un risque sanitaire pour les utilisateurs du véhicule automobile.

Le but de l'invention est de remédier au moins partiellement à ces inconvénients.

A cet effet, l'invention a pour objet un procédé de contrôle d'un système de qualité d'air pour véhicule automobile selon la revendication 1, comprenant une étape de mesure d'une concentration de particules dans au moins un flux d'air choisi parmi un flux d'air extérieur au véhicule automobile et un flux d'air intérieur, une étape de comparaison de la valeur de concentration mesurée à une valeur seuil et une étape de déclenchement ou d'arrêt du système de qualité d'air selon un résultat de l'étape de comparaison.

Ainsi, grâce au procédé selon la présente invention, il est possible de déclencher ou au contraire d'arrêter le système de qualité d'air, ce qui permet d'allonger la durée de vie d'un purificateur du système tout en réduisant les risques sanitaires pour les utilisateurs du véhicule automobile.

Selon l'invention, la valeur seuil correspond à une valeur de concentration maximale recommandée par une autorité nationale ou internationale, diminuée d'une valeur de concentration pré-déterminée.

Selon une autre caractéristique a valeur de concentration pré-déterminée est comprise entre 0 et 1, de préférence entre 0,75 et 1.

Selon une autre caractéristique de l'invention, la valeur seuil est fonction d'une efficacité d'un filtre du système de qualité d'air.

Selon une autre caractéristique de l'invention, la valeur seuil (S) est donnée par la formule suivante :

$$S = \frac{c_{max}\mathrm{RE}}{100 - E}$$

où $c_{max}$ est une valeur de concentration maximale recommandée par une autorité nationale ou internationale, R est une valeur comprise entre 0 et 1 et E est l'efficacité du filtre.

Selon une autre caractéristique de l'invention, la concentration de particules est mesurée dans ledit flux d'air intérieur et dans ledit flux d'air extérieur, la valeur de concentration en particules dans le flux d'air intérieur étant comparée à la valeur de concentration de particules au cours de l'étape de comparaison, la valeur seuil correspondant à la valeur de concentration de particules à l'extérieur du véhicule automobile.

Selon une autre caractéristique de l'invention, l'étape de mesure de la concentration de particules a une durée comprise entre 10 secondes et 60 secondes.

Selon une autre caractéristique de l'invention, le système de qualité d'air est déclenché si la valeur de concentration de particules mesurée est supérieure à une valeur seuil.

Selon une autre caractéristique de l'invention, le système de qualité d'air est arrêté si la valeur de la concentration de particules mesurée par un capteur de particules est inférieure à la valeur seuil.

Selon une autre caractéristique de l'invention, le procédé comprend une étape de maintien du système de qualité d'air en arrêt ou en fonctionnement.

D'autres caractéristiques et avantages de l'invention apparaîtront à la lecture de la description qui va suivre. Celle-ci est purement illustrative et doit être lue en regard des dessins annexés sur lesquels :

- la figure 1 illustre un chronogramme d'un procédé de contrôle d'un système de qualité d'air selon la présente invention ;

- la figure 2 illustre une entrée d'air d'un dispositif de ventilation, chauffage et/ou climatisation pour la mise en œuvre du procédé de la figure 1 selon un premier mode de réalisation ; et

- la figure 3 illustre une entrée d'air d'un dispositif de ventilation, chauffage et/ou climatisation pour la mise en œuvre du procédé de la figure 1 selon un deuxième mode de réalisation.

Système de qualité d'air

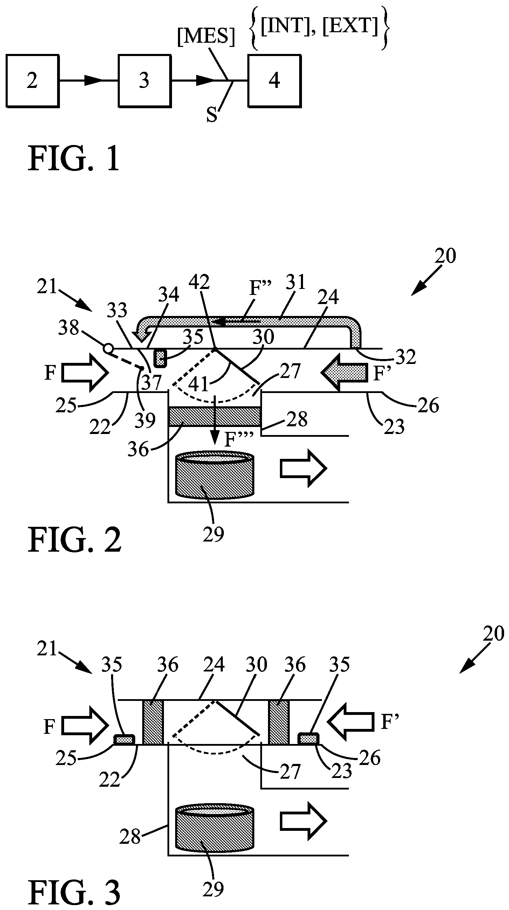

L'invention a pour objet un procédé de contrôle d'un système de qualité d'air pour véhicule automobile, référencé 1 dans la figure 1.

Le système de qualité d'air permet une dépollution de l'air destiné à alimenter l'habitacle du véhicule automobile.

Le système est soit intégré à un dispositif de chauffage, ventilation et/ou climatisation du véhicule automobile, soit un module spécialement dédié.

Le système comprend de préférence un purificateur d'air, tel qu'un filtre et/ou un ioniseur, permettant d'assainir un flux d'air qui le parcourt avant de pénétrer dans l'habitacle du véhicule.

Le système de qualité d'air comprend avantageusement un volet disposé en amont du purificateur d'air relativement au flux d'air.

Le volet est monté pivotant entre une position d'ouverture dans laquelle le volet laisse passer le flux d'air au travers du purificateur d'air et une position d'obturation dans laquelle le volet interdit au flux de traverser le purificateur d'air.

En complément ou en alternative, le système de qualité d'air comprend également un volet de commande de circulation d'un flux d'air issu de l'habitacle, autrement appelé air recyclé.

Le volet est pivotant entre une position d'ouverture dans laquelle le volet laisse passer le flux d'air recyclé à nouveau dans l'habitacle au travers du purificateur d'air et une position d'obturation dans laquelle le volet interdit au flux de pénétrer dans l'habitacle.

Le procédé de contrôle 1 permet le pivotement du volet du purificateur d'air et/ou du volet d'air recyclé.

Procédé de contrôle

Comme visible sur la figure 1, le procédé 1 comprend une étape 2 de mesure d'une concentration de particules dans au moins un flux d'air choisi parmi un flux d'air extérieur au véhicule automobile et un flux d'air intérieur.

La mesure de concentration de particules est effectuée par un capteur de matière particulaire.

Par matière particulaire, on entend toute particule de dimension suffisamment faible pour être transportées par l'air et être inhalées.

Les particules peuvent être solides, liquides, ou un mélange de solides et liquides.

Par exemple, le diamètre des particules est compris entre 0,01 $\mu$m et 10 $\mu$m.

Par exemple, la matière particulaire comprend un mélange de spores, de pollen, de fumée de cigarettes, de carbone ...

Le flux d'air intérieur correspond de préférence à un flux d'air circulant dans l'habitacle du véhicule automobile.

Le procédé 1 comprend également une étape de comparaison 3 de la valeur de concentration mesurée à une valeur seuil, notée S.

Le procédé 1 comprend également une étape 4 de déclenchement ou d'arrêt du système de qualité d'air selon un résultat de l'étape de comparaison.

Par déclenchement du système de qualité, on entend que le volet du purificateur d'air est en position d'ouverture et/ou que le volet d'air recyclé est en position d'ouverture.

Par arrêt du système de qualité, on entend que le volet du purificateur d'air est en position d'ouverture et/ou que le volet d'air recyclé est en position d'ouverture.

Avantageusement, le système de qualité d'air est déclenché si la valeur de concentration de particules mesurée, notée [MES] est supérieure à la valeur seuil S.

Avantageusement, le système de qualité d'air est arrêté si la valeur de la concentration de particules mesurée [MES] est inférieure à la valeur seuil S.

Avantageusement, la valeur seuil S correspond à une valeur de concentration maximale recommandée par une autorité nationale ou internationale, diminuée d'une valeur de concentration pré-déterminée, notée R.

La valeur de concentration pré-déterminée R est comprise entre 0 et 1, de préférence entre 0,75 et 1.

Avantageusement, la valeur seuil S est fonction d'une efficacité E d'un filtre du système de qualité d'air.

De manière connue, l'efficacité d'un filtre est calculée en % de poussière retenue (en nombre ou en masse) pour une granulométrie donnée.

De préférence, la valeur seuil S est donnée par la formule suivante :

$$S = \frac{c_{max}\mathrm{RE}}{100 - E}$$

où $c_{max}$ est la valeur de concentration maximale recommandée par une autorité nationale ou internationale, R est la valeur de concentration pré-déterminée et E est l'efficacité du filtre.

Pour limiter un colmatage du filtre dans le temps, il est possible de réduire intentionnellement la valeur de l'efficacité E.

Dans ce cas, toute valeur comprise entre la valeur d'efficacité vraie et 1 permet de limiter le colmatage tout en assurant une valeur inférieure au seuil considéré.

Selon un mode de réalisation particulièrement avantageux, la concentration de particules est mesurée dans le flux d'air intérieur et dans ledit flux d'air extérieur.

Le résultat de la mesure dans le flux d'air intérieur est une valeur de concentration en particules dans le flux d'air intérieur, notée [INT].

Le résultat de la mesure dans le flux d'air extérieur est une valeur de concentration en particules dans le flux d'air extérieur, notée [EXT].

Dans ce cas, au cours de l'étape de comparaison 3, la valeur de concentration en particules dans le flux d'air intérieur [INT] est comparée à la valeur de concentration de particules dans le flux d'air extérieur [EXT], la valeur seuil S correspondant à la valeur de concentration de particules à l'extérieur du véhicule automobile [EXT].

De préférence, dans lequel l'étape de mesure de la concentration de particules a une durée comprise entre 1 secondes et 60 secondes.

Cette durée permet d'éviter une succession trop rapide d'ouvertures et fermetures du système de qualité d'air.

Avantageusement, le système de qualité d'air comprend également une étape 5 de maintien du système de qualité d'air en arrêt ou déclenché.

Cette étape 5 permet de prendre en compte d'autres critères tels qu'un taux d'humidité ou un niveau de dioxyde de carbone dans l'habitacle.

Dispositif pour la mise en œuvre du procédé

Premier mode de réalisation

Avantageusement, l'étape de mesure 2 se fait à l'aide d'un seul capteur.

La figure 2 illustre un système de qualité d'air d'un dispositif de ventilation, chauffage et/ou climatisation 21 pour la mise en œuvre de l'étape de mesure 2.

Le système de qualité comprend une entrée d'air 20 du dispositif de ventilation, chauffage et/ou climatisation 21.

Comme visible sur la figure 2, l'entrée d'air comprend un conduit d'air extérieur 22 et un conduit d'air de recyclage 23.

Le conduit d'air extérieur 22 permet la circulation d'un flux d'air F provenant de l'extérieur du véhicule automobile.

Le conduit d'air intérieur 23 permet la circulation d'un flux d'air F' provenant de l'habitacle du véhicule automobile.

Sur la figure 2, les conduits d'air extérieur 22 et d'air de recyclage 23 sont formés d'un même canal 24, le flux d'air extérieur F pénétrant dans le canal 24 par une première extrémité 25 du canal 24, tandis que le flux d'air intérieur F' pénètre dans le canal 24 par une deuxième extrémité 26.

Les flux F et F' sont opposés l'un à l'autre.

Le canal 24 est percé d'un orifice 27 formant entrée d'un canal 28 d'alimentation en air d'un ventilateur 29 du dispositif 21.

Le canal 24 est muni d'un volet 30 pour distribuer le canal 28 en air extérieur et/ou en air intérieur, comme il va être détaillé.

Le volet 30 est par la suite appelé volet de distribution.

L'entrée d'air 20 comprend également un conduit 31 piqué sur les canaux d'air intérieur 23 et d'air extérieur 22.

Le conduit 31 est appelé conduit de dérivation.

Le canal de dérivation 31 permet qu'un flux d'air F" soit prélevé sur le canal d'air intérieur 23 et circule jusqu'au conduit d'air extérieur 22 entre une entrée 32 du conduit 31 piquée sur le conduit d'air intérieur 23 et une sortie 33 hors du conduit 31 piquée sur le conduit d'air extérieur 22.

L'entrée d'air 20 comprend également un volet 34 d'admission du flux d'air F" dans le canal d'air extérieur 22, comme il va être détaillé.

Le volet 34 est par la suite appelé volet de dérivation.

L'entrée d'air 20 comprend également un capteur de particules 35 disposé en aval du volet 34 relativement aux flux d'air F et F".

Un filtre 36 est disposé dans le canal 28 en amont du ventilateur 29.

Le volet de dérivation 34 est monté mobile entre une position d'ouverture du conduit de dérivation 31 et une position de fermeture du conduit de dérivation 31.

Le volet de dérivation 34 comprend une paroi 37 pivotant autour d'un axe 38 entre la position d'ouverture et la position de fermeture.

Sur le mode de réalisation illustré à la figure 2, le volet 34 est un volet de type drapeau, l'une 39 des extrémités de la paroi 37 étant libre tandis qu'une extrémité opposée est fixe, solidaire de l'axe 38.

Dans la position d'ouverture, illustrée en pointillés sur la figure 2, la paroi 37 du volet 34 est disposée à distance de la sortie 33, ce qui permet au flux d'air intérieur F" de pénétrer dans le canal d'air extérieur 22.

Dans la position d'ouverture, la paroi 37 du volet 34 est disposée à l'intérieur du canal d'air extérieur 22.

Dans la position de fermeture, illustrée en trait plein sur la figure 2, la paroi 37 du volet 34 est disposée contre la sortie 33 du canal, ce qui empêche tout passage du flux d'air F" dans le canal d'air extérieur 22.

Le capteur de particules 35 est disposé relativement au volet de sorte qu'en position d'ouverture du conduit de dérivation 31, le capteur de particules reçoit le flux d'air F" exclusivement.

Pour ce faire, comme visible sur la figure 2, le capteur de particules est disposé contre une portion 40 d'un parcours de l'extrémité libre 39 du volet 34 au cours de son mouvement de pivotement.

Ainsi, le pivotement du volet de dérivation assure que le flux d'air extérieur et le flux d'air intérieur traverse alternativement le capteur de particules.

Comme visible sur la figure 2, le volet de distribution 30 est monté mobile entre une position d'alimentation du canal 28 en air extérieur, dite position extérieure, et une position d'alimentation du canal 28 en air intérieur, dite position intérieure.

La position extérieure est illustrée en trait plein sur la figure 2, tandis que la position intérieure est illustrée en pointillés.

Le volet 30 comprend une paroi 41 pivotant autour d'un axe 42 entre la position d'alimentation en air extérieur et la position d'alimentation en air intérieur.

Dans la position extérieure, la paroi 41 du volet 30 obture le canal d'air intérieur 23.

Dans cette position, le flux d'air F issu du canal d'air extérieur circule dans le canal 28.

De préférence, le volet 34 est en position de fermeture du conduit de dérivation 31.

En position intérieure, le volet 30 obture le canal d'air extérieur 22.

Dans cette position, le flux d'air F' issu du canal d'air intérieur circule dans le canal 28.

Entre la position intérieure et la position extérieure, le volet 30 décrit une pluralité de positions intermédiaires dans lesquelles le canal 28 est alimenté en air extérieur et en air intérieur.

Le volet 30 est configuré pour être commandé par un résultat de la mesure du capteur de matière particulaire, ce qui permet de diriger dans l'habitacle le flux d'air F issu de l'extérieur, le flux d'air F' issu de l'intérieur ou un mélange des deux.

Par exemple, en cas de pic de pollution extérieure détectée par le résultat de la mesure du capteur 35, le volet 30 pivote en position intérieure.

Au contraire, en cas de pollution intérieure (fumée de cigarette...) ou en cas de pollution extérieure stable et supérieure aux limites requises, le volet 30 pivote en position extérieure.

Deuxième mode de réalisation

La figure 3 illustre un système de qualité d'air d'un dispositif de ventilation, chauffage et/ou climatisation 21 pour la mise en œuvre de l'étape de mesure 2 selon un autre mode de réalisation.

Les références numériques portant sur des éléments identiques à celles du premier mode de réalisation restent inchangées.

Le système de qualité comprend une entrée d'air 20 du dispositif de ventilation, chauffage et/ou climatisation 21.

Selon le mode de réalisation illustré à la figure 3, l'entrée d'air comprend un conduit d'air extérieur 22 et un conduit d'air de recyclage 23.

Le conduit d'air extérieur 22 permet la circulation d'un flux d'air F provenant de l'extérieur du véhicule automobile.

Le conduit d'air intérieur 23 permet la circulation d'un flux d'air F' provenant de l'habitacle du véhicule automobile.

Sur la figure 3, les conduits d'air extérieur 22 et d'air de recyclage 23 sont formés d'un même canal 24, le flux d'air extérieur F pénétrant dans le canal 24 par une première extrémité 25 du canal 24, tandis que le flux d'air intérieur F' pénètre dans le canal 24 par une deuxième extrémité 26.

Les flux F et F' sont opposés l'un à l'autre.

Chacun des canaux d'air intérieur 23 et d'air extérieur 22 est muni d'un capteur de particules 35.

Le canal 24 est percé d'un orifice 27 formant entrée d'un canal 28 d'alimentation en air d'un ventilateur 29 du dispositif 21.

Un filtre 36 est disposé dans chacun des canaux d'air extérieur et d'air intérieur, en amont de l'orifice d'entrée du canal 28 relativement respectivement au flux d'air F et F'.

Le canal 24 est muni d'un volet 30 pour distribuer le canal 28 en air extérieur et/ou en air intérieur.

Le volet de distribution 30 est monté mobile entre une position d'alimentation du canal 28 en air extérieur, dite position extérieure, et une position d'alimentation du canal 28 en air intérieur, dite position intérieure.

La position extérieure est illustrée en trait plein sur la figure 3, tandis que la position intérieure est illustrée en pointillés.

Le volet 30 comprend une paroi pivotant autour d'un axe entre la position d'alimentation en air extérieur et la position d'alimentation en air intérieur.

Dans la position extérieure, la paroi du volet obture le canal d'air intérieur 23.

Dans cette position, le flux d'air issu du canal d'air extérieur circule dans le canal 28.

De préférence, le volet est en position de fermeture du canal de dérivation.

En position intérieure, le volet obture le canal d'air extérieur 22.

Dans cette position, le flux d'air issu du canal d'air intérieur circule dans le canal 28.

Entre la position intérieure et la position extérieure, le volet décrit une pluralité de positions intermédiaires dans lesquelles le canal 28 est alimenté en air extérieur et en air intérieur.

Le volet 30 est configuré pour être commandé par un résultat de la mesure du capteur de matière particulaire, ce qui permet de diriger dans l'habitacle le flux d'air F issu de l'extérieur, le flux d'air F" issu de l'intérieur ou un mélange des deux.

Par exemple, en cas de pollution extérieure détectée par le résultat de la mesure du capteur 35, le volet 30 pivote en position intérieure.

Au contraire, en cas de pollution intérieure (fumée de cigarette...) ou en cas de pollution extérieure stable et supérieure aux limites requises, le volet 30 pivote en position extérieure.

Avantages

Le procédé selon la présente invention permet de déclencher ou au contraire d'arrêter le système de qualité d'air, ce qui permet d'allonger la durée de vie d'un purificateur du système tout en réduisant les risques sanitaires pour les utilisateurs du véhicule automobile.

Comme déjà indiqué, le procédé selon l'invention permet en particulier de comparer la valeur de concentration en particules dans le flux d'air extérieur à la valeur de concentration en particules dans le flux d'air intérieur, sur une plage de temps déterminée, et/ou de comparer la valeur de concentration en particules dans le flux d'air extérieur à une valeur réglementaire, assurant de fournir une information pertinente sur la qualité de l'air à l'extérieur et dans l'habitacle.

Le procédé selon l'invention permet en particulier de moduler le fonctionnement du système de qualité selon les circonstances de route, telles que par exemple un pic de pollution extérieure, une pollution extérieure stable et supérieure aux limites requises, une pollution intérieure générée notamment par de la fumée de cigarette.

## Revendications

1. Procédé de contrôle d'un système de qualité d'air pour véhicule automobile, comprenant une étape de mesure d'une concentration de particules dans au moins un flux d'air choisi parmi un flux d'air extérieur au véhicule automobile et un flux d'air intérieur, une étape de comparaison de la valeur de concentration mesurée à une valeur seuil et une étape de déclenchement ou d'arrêt du système de qualité d'air selon un résultat de l'étape de comparaison **caractérisé en ce que** la valeur seuil correspond à une valeur de concentration maximale recommandée par une autorité nationale ou internationale, diminuée d'une valeur de concentration pré-déterminée.

2. Procédé de contrôle selon l'une des revendications précédentes, dans lequel la valeur seuil est fonction d'une efficacité d'un filtre du système de qualité d'air.

3. Procédé de contrôle selon la revendication précédente, dans lequel la valeur seuil (S) est donnée par la formule suivante :

$$S = \frac{c_{max}\text{RE}}{100 - E}$$

où $c_{max}$ est une valeur de concentration maximale recommandée par une autorité nationale ou internationale, R est une valeur comprise entre 0 et 1 et E est l'efficacité du filtre.

4. Procédé de contrôle selon l'une des revendications précédentes, dans lequel la concentration de particules est mesurée dans ledit flux d'air intérieur et dans ledit flux d'air extérieur, la valeur de concentration en particules dans le flux d'air intérieur étant comparée à la valeur de concentration de particules dans le flux d'air extérieur au cours de l'étape de comparaison, la valeur seuil correspondant à la valeur de concentration de particules à l'extérieur du véhicule automobile.

5. Procédé de contrôle selon l'une des revendications précédentes, dans lequel l'étape de mesure de la concentration de particules a une durée comprise entre 10 secondes et 60 secondes.

6. Procédé de contrôle selon l'une des revendications précédentes, dans lequel le système de qualité d'air est déclenché si la valeur de concentration de particules mesurée est supérieure à une valeur seuil.

7. Procédé de contrôle selon la revendication 1, dans lequel le système de qualité d'air est arrêté si la valeur de la concentration de particules mesurée par un capteur de particules est inférieure à la valeur seuil.

8. Procédé de contrôle selon l'une des revendications précédentes, comprenant une étape de maintien du système de qualité d'air en arrêt ou en fonctionnement.

## Patentansprüche

1. Verfahren zur Steuerung eines Luftqualitätssystems für ein Kraftfahrzeug, umfassend einen Schritt des Messens einer Partikelkonzentration in mindestens einem Luftstrom, der aus einem Luftstrom außerhalb des Kraftfahrzeugs und einem inneren Luftstrom ausgewählt ist, einen Schritt des Vergleichens des gemessenen Konzentrationswerts mit einem Schwellenwert und einen Schritt des Auslösens oder Anhaltens des Luftqualitätssystems je nach einem Ergebnis des Schritts des Vergleichens, **dadurch gekennzeichnet, dass** der Schwellenwert einem maximalen Konzentrationswert entspricht, der von einer nationalen oder internationalen Behörde empfohlen wird, der um einen vorbestimmten Konzentrationswert verringert ist.

2. Steuerungsverfahren nach einem der vorhergehenden Ansprüche, wobei der Schwellenwert von einer Wirksamkeit eines Filters des Luftqualitätssystems abhängig ist.

3. Steuerungsverfahren nach dem vorhergehenden Anspruch, wobei sich der Schwellenwert (S) aus der folgenden Formel ergibt:

$$S = \frac{c_{max}\text{RE}}{100 - E}$$

wobei $c_{max}$ ein maximaler Konzentrationswert ist, der von einer nationalen oder internationalen Behörde empfohlen wird, R ein Wert zwischen 0 und 1 und E die Wirksamkeit des Filters ist.

4. Steuerungsverfahren nach einem der vorhergehenden Ansprüche, wobei die Partikelkonzentration im inneren Luftstrom und im äußeren Luftstrom gemessen wird, wobei im Verlauf des Schritts des Vergleichens der Partikelkonzentrationswert im inneren Luftstrom mit dem Partikelkonzentrationswert im äußeren Luftstrom verglichen wird, wobei der Schwellenwert dem Partikelkonzentrationswert außerhalb des Kraftfahrzeugs entspricht.

5. Steuerungsverfahren nach einem der vorhergehenden Ansprüche, wobei der Schritt des Messens der Partikelkonzentration eine Dauer zwischen 10 und 60 Sekunden aufweist.

**6.** Steuerungsverfahren nach einem der vorhergehenden Ansprüche, wobei das Luftqualitätssystem ausgelöst wird, wenn der gemessene Partikelkonzentrationswert höher als ein Schwellenwert ist.

**7.** Steuerungsverfahren nach Anspruch 1, wobei das Luftqualitätssystem angehalten wird, wenn der Partikelkonzentrationswert, der von einem Partikelsensor gemessen wird, niedriger als der Schwellenwert ist.

**8.** Steuerungsverfahren nach einem der vorhergehenden Ansprüche, umfassend einen Schritt des Haltens des Luftqualitätssystems im Stillstand oder im Betrieb.

**Claims**

**1.** Method for checking an air quality system for a motor vehicle, comprising a step of measurement of a concentration of particles in at least one airflow chosen from among an airflow outside the motor vehicle and an airflow inside, a step of comparison of the measured concentration value to a threshold value and a step of triggering or stopping the air quality system according to a result of the comparison step, **characterized in that** the threshold value corresponds to a maximum concentration value recommended by a national or international authority, minus a predetermined concentration value.

**2.** Checking method according to one of the preceding claims, wherein the threshold value is a function of an effectiveness of a filter of the air quality system.

**3.** Checking method according to the preceding claim, wherein the threshold value (S) is given by the following formula:

$$S = \frac{c_{max}\,RE}{100 - E}$$

in which $c_{max}$ is a maximum concentration value recommended by a national or international authority, R is a value lying between 0 and 1 and E is the effectiveness of the filter.

**4.** Checking method according to one of the preceding claims, wherein the particle concentration is measured in said inside airflow and in said outside airflow, the particle concentration value in the inside airflow being compared to the particle concentration value in the outside airflow during the comparison step, the threshold value corresponding to the particle concentration value outside the motor vehicle.

**5.** Checking method according to one of the preceding claims, wherein the step of measurement of the particle concentration has a duration of between 10 seconds and 60 seconds.

**6.** Checking method according to one of the preceding claims, wherein the air quality system is triggered if the measured particle concentration value is above a threshold value.

**7.** Checking method according to Claim 1, wherein the air quality system is stopped if the particle concentration value measured by a particle sensor is below the threshold value.

**8.** Checking method according to one of the preceding claims, comprising a step of keeping the air quality system stopped or operating.

FIG. 1

FIG. 2

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2872195